# EUROPEAN PATENT SPECIFICATION

(11) **EP 1 980 945 B1**
(45) Date of publication and mention of the grant of the patent: **09.03.2011**
(21) Application number: 06712717.5
(22) Date of filing: 31.01.2006
(51) Int. Cl.: G06F 12/08, G06F 12/12

(54) **MEMORY ACCESS CONTROL APPARATUS AND MEMORY ACCESS CONTROL METHOD**
SPEICHERZUGRIFFSSTEUERVORRICHTUNG UND SPEICHERZUGRIFFSSTEUERVERFAHREN
APPAREIL ET PROCEDE DE COMMANDE D'ACCES EN MEMOIRE

(43) Date of publication of application: 15.10.2008
(73) Proprietor: FUJITSU LIMITED, Kawasaki-shi, Kanagawa 211-88 (JP)
(72) Inventor: KOJIMA, Hiroyuki Fujitsu Limited, Kanagawa 2118588 (JP); OKAWA, Tomoyuki Fujitsu Limited, Kanagawa 2118588 (JP)
(74) Representative: Stebbing, Timothy Charles
(86) International application number: PCT/JP2006/301574
(87) International publication number: WO 2007/088591

(56) References cited:
- JP-A- 06 161 900
- JP-A- 55 077 072
- JP-A- 56 077 964
- JP-A- 2002 082 832
- US-A1- 2004 078 702

## Description

### TECHNICAL FIELD

The present invention relates to a memory access control apparatus and a memory access control method for set-associative cache memory control, and, particularly to a memory access control apparatus and a memory access control method capable of minimizing retry attempts and maintaining a high cache hit rate while preventing deletion of a cache entry at an unexpected timing.

### BACKGROUND ART

A set associative scheme has been used to control a cache in a memory access control apparatus. In the set associative cache, a set is selected using part of an address of a data block as an index, and the data block is stored in any one of WAYs contained in the set. Each set includes a plurality of WAYs. For example, in the case of a 4WAY set associative cache, each set includes four WAYs.

A set-associative cache cannot store all data blocks. Therefore, a memory access control apparatus retains in the cache data blocks that ate highly likely to be accessed while replacing the content thereof as required. An algorithm for replacing the content of the cache is called replacement algorithm, and is an important element to increase the cache hit rate.

The time required for a process in response to a load/store request from a CPU (Central Processing Unit) varies largely depending on whether there is a cache hit. When a request from the CPU results in a cache miss, it is necessary to access a main memory. In this case, the process takes time a hundred times or more longer than that when there is a cache hit. To efficiently perform processes as above each requiring a different processing time, the memory access control apparatus includes a Move In Buffer (hereinafter, "MIB") to manage performing of a process requiring a long processing time as to access the main memory.

The MIB stores information including an address of a data block to be processed and a WAY with respect to each of entries therein. The MIB performs and monitors a process based on the information stored for each entry. When the process is completed, the MIB releases the entry corresponding to this process. With such MIB enabling parallel processing of a plurality of requests, the memory access control apparatus can perform other processes without waiting for the completion of a high-latency process as to access the main memory.

However, the use of the MIB requires a careful selection of a WAY. For example, assume that the MIB is loading a data block X corresponding to a set 1 from the main memory, and that this data block X is to be cached in a WAY0. In this case, when the WAY0 is selected as a cache to store a data block Y corresponding to the set 1 in a different process, immediately after storing the data block Y, the WAY0 may be overwritten by the data block X loaded thereinto by the MIB. As a result, the data block Y is deleted from the cache.

In this case, prior to the overwriting of the WAY0, the data block Y is written to the main memory. Therefore, the data itself is not deleted. However, due to the deletion from the cache, the cache hit rate decreases. When such deletion occurs in a low-level cache of a hierarchical cache system including a primary cache and a secondary cache, such a relation that a data block stored in a higher-level cache also needs to be stored in a lower-level cache may not be maintained.

Therefore, in a conventional technology, when there is a load/store request for a data block in the same set as that of the data block being processed by the MIB, the request is retried to delay the execution of the request until the MIB completes the process, and thus deletion of a cache entry is prevented. Alternatively, when the MIB is processing data blocks of the same set and the same WAY, a WAY can be selected by shifting WAYs by the number of data blocks as described in Patent Document 1.

Patent Document 1: Japanese Patent Application Laid-open No. 2001-51899

### DISCLOSURE OF INVENTION

### PROBLEMS TO BE SOLVED BY THE INVENTION

However, according to the conventional technology that delays the execution of a request, despite easy implementation, a request is retried even when there is an available WAY in the same set, resulting in performance degradation. Besides, according to the conventional technology described in the Patent Document 1, since a WAY different from the WAY selected by a replacement algorithm is selected, the cache hit rate decreases.

The present invention has been achieved to solve the above problems in the conventional technology and it is an object of the present invention to provide a memory access control apparatus and a memory access control method capable of minimizing retry attempts and maintaining a high cache hit rate while preventing deletion of a cache entry at an unexpected timing due to the operation of an MIB.

### MEANS FOR SOLVING PROBLEM

According to an aspect of the present invention, a memory access control apparatus that performs a set associative cache control with a buffer for storing information on a plurality of requests and processing the requests in parallel including a processing-status output unit that that searches, upon receipt of a memory access request, the buffer for a request for a data block to be processed corresponding to a same set of a data block to be processed in response to the memory access request and outputs a WAY assigned to a selected request; a replace-WAY selecting unit that selects a WAY to be assigned to the memory access request based on a predetermined replacement algorithm while excluding the WAY output from the processing-status output unit; and a control unit that stores, when the data block to be processed in response to the memory access request does not result in a cache hit, the data block in the WAY selected by the replace-WAY selecting unit.

According to another aspect of the present invention, a memory access control method for a memory access control apparatus that performs a set associative cache control with a buffer for storing information on a plurality of requests and processing the requests in parallel, including searching, upon receipt of a memory access request, the buffer for a request for a data block to be processed corresponding to a same set of a data block to be processed in response to the memory access request; outputting a WAY assigned to the prior request; selecting a WAY to be assigned to the memory access request based on a predetermined replacement algorithm while excluding the WAY output at the outputting; and storing, when the data block to be processed in response to the memory access request does not result in a cache hit, the data block in the WAY selected at the selecting.

As described above, a WAY to be assigned to a new request is selected from those excluding WAYs assigned to requests processed prior to the new one based on a replacement algorithm. Thus, it is possible to maintain a high cache hit rate as well as to prevent deletion of a cache entry at an unexpected timing.

The replacement algorithm may be an LRU (Least Recently Used) algorithm.

When an LRU algorithm is used as the replacement algorithm, a cache hit rate can be increased.

The control unit may control the memory access request to be retried if the output of the processing-status output unit includes all available WAYs when the data block to be processed in response to the memory access request does not result in a cache hit.

The memory access control method may further include controlling the memory access request to be retried if the WAY output at the outputting includes all available WAYs when the data block to be processed in response to the memory access request does not result in a cache hit.

As described above, when a data block requested to be processed does not result in a cache hit, the request may be retried only when all WAYs are unavailable. With this, performance degradation due to the retry can be minimized.

The control unit may control the memory access request to be retried if the output of the processing-status output unit includes a hit WAY when the data block to be processed in response to the memory access request results in a cache hit.

The memory access control method may further include controlling the memory access request to be retried if the WAY output at the outputting includes a hit WAY when the data block to be processed in response to the memory access request results in a cache hit.

As described above, when a data block requested to be processed results in a cache hit, the request may be retried when the hit WAY is included in WAYs assigned to requests processed prior to it. With this, it is possible to prevent deletion of a cache entry at an unexpected timing.

### EFFECT OF THE INVENTION

According to the present invention, a WAY to be assigned to a new request is selected from those excluding WAYs assigned to requests processed prior to the new one based on a replacement algorithm. Thus, it is possible to maintain a high cache hit rate as well as to prevent deletion of a cache entry at an unexpected timing.

Further, according to the present invention, an LRU algorithm is used as a replacement algorithm, which increases a cache hit rate.

Still further, according to the present invention, when a data block requested to be processed does not result in a cache hit, the request is retried only when all WAYs are unavailable. Therefore, performance degradation due to the retry can be minimized.

Still further, according to the present invention, when a data block requested to be processed results in a cache hit, the request is retried when the hit WAY is included in WAYs assigned to requests processed prior to it. Therefore, it is possible to prevent deletion of a cache entry at an unexpected timing.

### BRIEF DESCRIPTION OF DRAWINGS

[Fig. 1] Fig. 1 is a functional block diagram of a configuration of a memory access control apparatus according to an embodiment of the present invention.
[Fig. 2] Fig. 2 is a functional block diagram of a configuration of an MIB.
[Fig. 3] Fig. 3 is a functional block diagram of a configuration of a replace-WAY selecting unit.
[Fig. 4] Fig. 4 is a circuit schematic diagram of one example of a configuration of a WAY selecting unit.
[Fig. 5] Fig. 5 is a circuit schematic diagram of one example of a configuration of a WAY-use determining unit. [Fig. 6] Fig. 6 is a flowchart of the operation of the memory access control apparatus shown in Fig. 1.
[Fig. 7] Fig. 7 is a functional block diagram of a configuration of a conventional memory access control apparatus.
[Fig. 8] Fig. 8 is a functional block diagram of a configuration of a hit determining unit.
[Fig. 9] Fig. 9 is a functional block diagram of a configuration of an MIB.
[Fig. 10] Fig. 10 is a functional block diagram of a configuration of a replace-WAY selecting unit.
[Fig. 11] Fig. 11 is a flowchart of the operation of the memory access control apparatus shown in Fig. 7.

### EXPLANATIONS OF LETTERS OR NUMERALS

- 11 to 13: OR circuit
- 14: AND circuit
- 21, 22: AND circuit
- 23: OR circuit
- 100: CPU
- 200 to 203: Memory access control apparatus
- 210: Port
- 220: Hit determining unit
- 221: Tag memory
- 222: Tag comparing unit
- 230: MIB
- 231a: Register
- 231b: Index comparing unit
- 232: Processing-status output unit
- 240: Replace-WAY selecting unit
- 241: LRU-RAM
- 242: WAY selecting unit
- 250: Control unit
- 300: Cache memory
- 400: Main memory
- 500 to 503: Memory access control apparatus
- 510: Port
- 520: Hit determining unit
- 530: MIB
- 531a: Register
- 531b: Index comparing unit
- 531c: Decoder
- 531d: Processing-WAY output unit
- 532: Processing-status output unit
- 540: Replace-WAY selecting unit
- 541: LRU-RAM
- 542: WAY selecting unit
- 543: WAY-use determining unit
- 550: Control unit

### BEST MODE(S) FOR CARRYING OUT THE INVENTION

Exemplary embodiments of a memory access control apparatus and a memory access control method according to the present invention are explained in detail below with reference to the accompanying drawings. Note that the invention is not limited to the embodiments.

### Embodiment

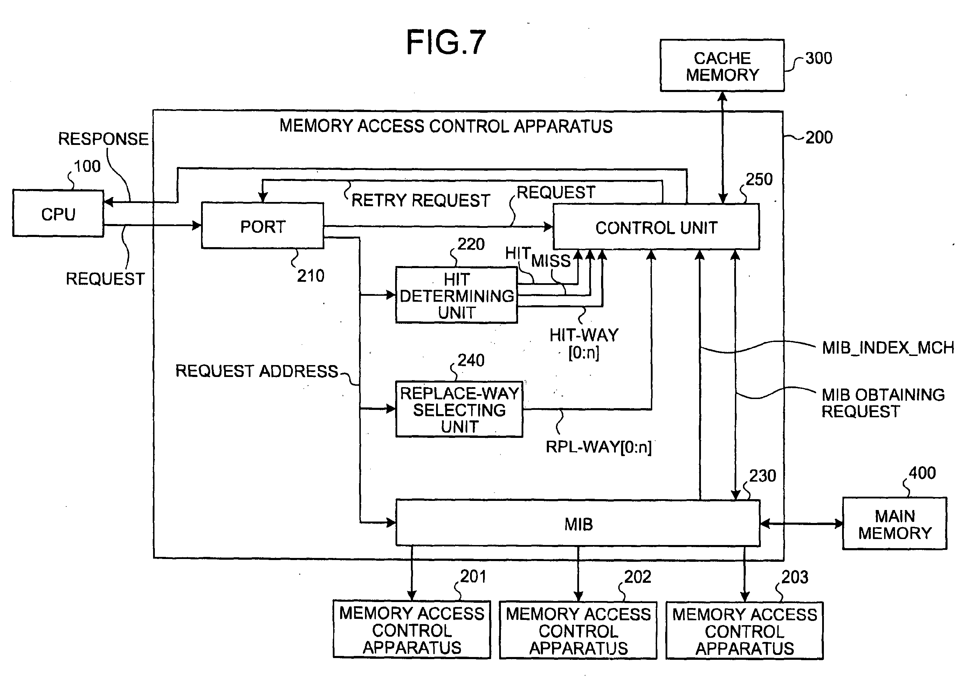

First, a conventional memory access control system for delaying the execution of a request until the process of an MIB is completed is explained. Fig. 7 is a functional block diagram of a configuration of a conventional memory access control apparatus. As shown in Fig. 7, a memory access control apparatus 200 is configured to be connected to a CPU 100, a cache memory 300, and a main memory 400.

The CPU 100 performs various kinds of process. The CPU 100 issues requests of loading and storing data to the main memory 400, to the memory access control apparatus 200, and receives results of the processing. When caches are hierarchized, other memory access control apparatuses are also present between the CPU 100 and the memory access control apparatus 200, in some cases.

The cache memory 300 is an SRAM (Static Random Access Memory) or the like capable of accessing at a high speed, and improves a data access speed by holding a copy of part of data of the main memory 400. Data is stored in the cache memory 300 in a data block unit, and a storage area of a data block is specified based on a combination of a set and a WAY. The main memory 400 stores therein programs and data necessary for the CPU 100 to perform various kinds of processes.

The memory access control apparatus 200 controls accesses to the cache memory 300 and the main memory 400 to enable the CPU 100 to efficiently execute load and store requests. The memory access control apparatus 200 employs a set associative scheme to control caches.

When the multiprocessor system includes caches for each processor, the memory access control apparatus 200 is also connected to other memory access control apparatuses such as a memory access control apparatus 201 to a memory access control apparatus 203.

As shown in Fig. 7, the memory access control apparatus 200 includes a port 210, a hit determining unit 220, an MIB 230, a replace-WAY selecting unit 240, and a control unit 250. Details of each processing unit are explained below by focusing attention to a process up to an allocation of a WAY to a new request.

The port 210 temporarily stores a request sent from the CPU 100. The request in the port 210 is read in a predetermined priority order, and is sent to the control unit 250. At the same time, an address (hereinafter, "request address") of a requested data block to be processed is sent to the hit determining unit 220, the MIB 230, and the replace-WAY selecting unit 240.

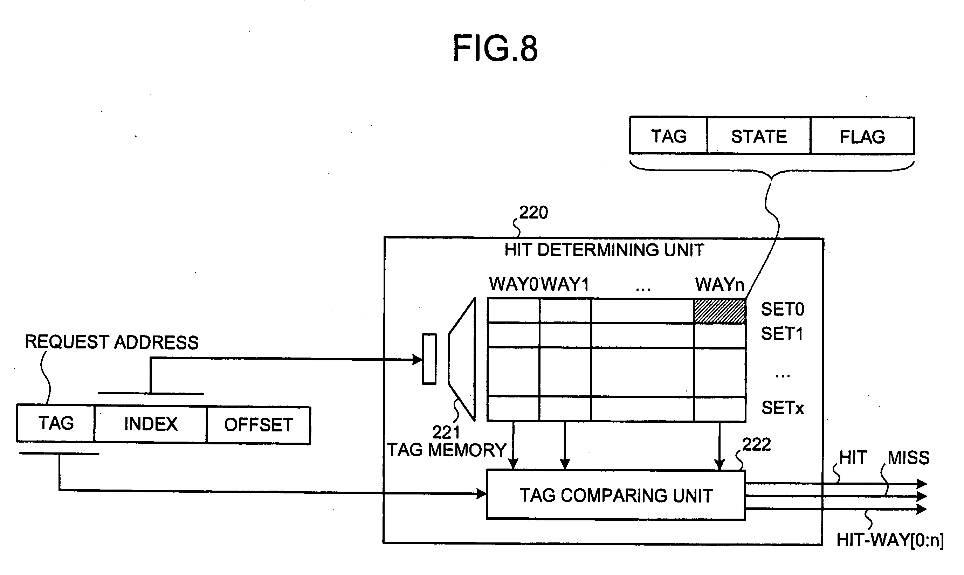

The hit determining unit 220 determines whether a data block corresponding to a request address sent from the port 210 is stored in the cache memory 300. Fig. 8 depicts a configuration of the hit determining unit 220. As shown in Fig. 8, the hit determining unit 220 includes a tag memory 221, and a tag comparing unit 222. When a request address is sent from the port 210, the hit determining unit 220 inputs an index of this request address to the tag memory 221, and inputs the tag to the tag comparing unit 222.

The request address is explained first. The request address is divided into a tag, an index, and an offset. The offset is a lower bit of the request address, and is a portion for specifying a position within a data block. The tag and the index are portions for identifying the data block. It is determined in which set of the cache the data block is to be stored, using the index portion.

The tag memory 221 stores therein management information concerning a data block stored in the cache memory 300. The management information includes a tag of an address of a data block, a status about whether an updating is performed, and various kinds of control flags. The management information is stored in the same area as where a corresponding data block is stored in the cache memory 300. That is, when a certain data block is stored in the WAY0 of the set 1 of the cache memory 300, the management information is stored in the WAY0 of the set 1.

When an index of a request address is input, the tag memory 221 selects a set corresponding to this index, and sends the management information of each WAY contained in the selected set to the tag comparing unit 222.

When an index of a request address is input, the tag comparing unit 222 compares the input tag with the management information sent from the tag memory 221, and determines whether a data block corresponding to the request address is stored in the cache memory 300. Specifically, when the management information sent from the tag memory 221 contains the same information as that of the input tag, the tag comparing unit 222 determines that the data block is cached in the WAY corresponding to this management information.

When the tag comparing unit 222 determines that the data block corresponding to the request block is stored in the cache memory 300, the tag comparing unit 222 turns ON a HIT signal, and further turns ON a HIT-WAY signal corresponding to the WAY in which the data block is stored. On the other hand, when the tag comparing unit 222 determines that the data block corresponding to the request block is not stored in the cache memory 300, the tag comparing unit 222 turns a MISS signal ON. These signals are output to the control unit 250.

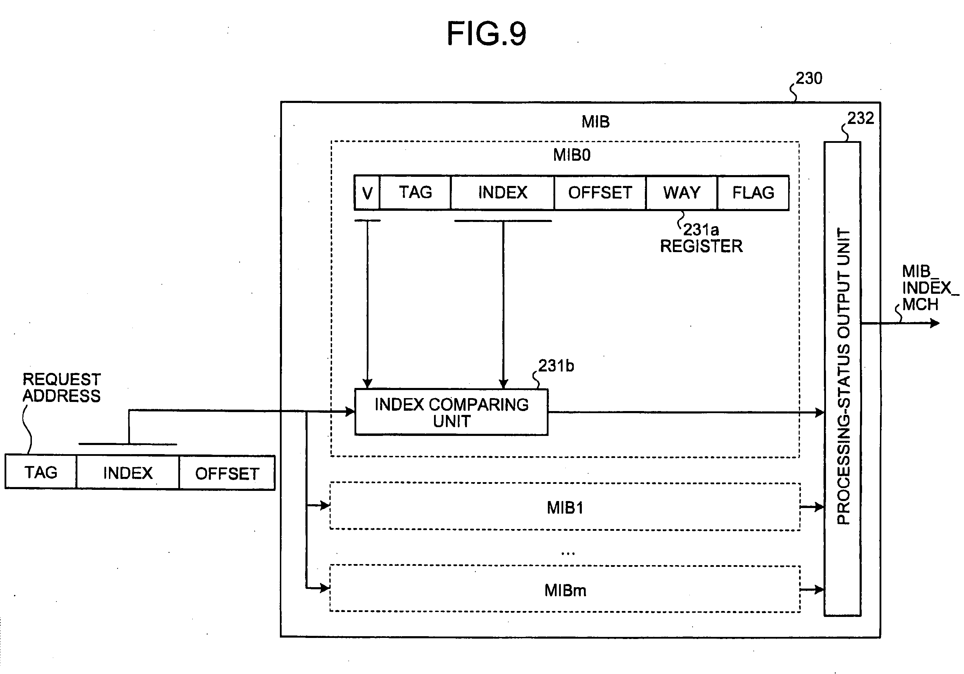

The MIB 230 manages the execution of a time-consuming process such as transfer of a data block between the main memory 400 and the MIB 230. Fig. 9 depicts a configuration of the MIB 230. As shown in Fig. 9, the MIB 230 has a plurality of entries of MIB0 to MIBm, and a processing-status output unit 232. When a request address is sent from the port 210, the MIB 230 inputs an index of the request address to each entry.

Each entry includes a register 231a, and an index comparing unit 231b, and manages the execution of a process assigned thereto. The register 231a stores therein information on the assigned process, and stores a V bit indicating whether a process is assigned to a corresponding entry, a tag indicating a request address of the assigned process, an index and an offset, a WAY assigned to the process, and various kinds of control flags.

When an index of a request address is input, the index comparing unit 231b obtains a V bit and an index of the register 231a of the entry, and turns ON a signal to be output, when the V bit is standing and when the input index coincides with the obtained index.

The processing-status output unit 232 takes a logical sum of signals output from the index comparing unit 231b of each entry in this way, and outputs the logical sum as an MIB_INDEX_MCH signal. That is, the MIB_INDEX_MCH signal turns ON when a data block having the same index as that of the request address is to be processed by the MIB 230. This signal is output to the control unit 250.

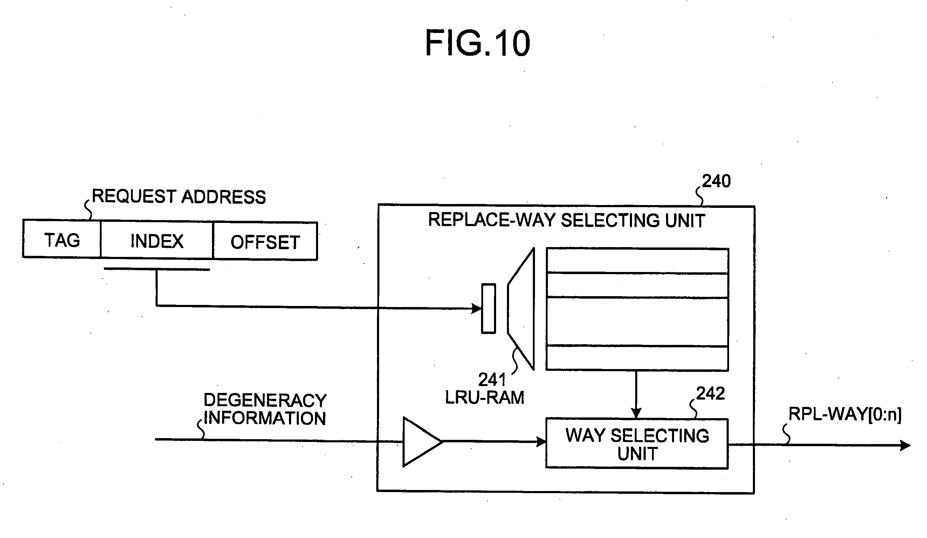

The replace-WAY selecting unit 240 selects a WAY in which the data block corresponding to the request address sent from the port 210 is to be stored. Fig. 10 depicts a configuration of the replace-WAY selecting unit 240. As shown in Fig. 10, the replace-WAY selecting unit 240 includes an LRU-RAM 241, and a WAY selecting unit 242. When a request address is sent from the port 210, the replace-WAY selecting unit 240 inputs the index of the request address to the LRU-RAM 241.

The LRU-RAM 241 stores therein information on a time at which the cache memory 300 is accessed last for each set and for each WAY. When the index of the request address is input, the LRU-RAM 241 selects a set corresponding to this index, and outputs the time at which each WAY contained in the selected set is accessed last, to the WAY selecting unit 242.

When the time at which each WAY is accessed last is input, the WAY selecting unit 242 selects a WAY accessed at the oldest time, and sets the RPL-WAY signal corresponding to this WAY to ON. In this case, the WAY selecting unit 242 refers to input degeneracy information, and excludes a WAY unable to be used due to a permanent fault or the like, from WAYs to be selected. The RPL-WAY signal is output to the control unit 250.

The control unit 250 executes various kinds of control corresponding to a request sent from the port 210. The control unit 250 receives the request from the port 210, and receives input of various kinds of signals output from the hit determining unit 220, the MIB 230, and the replace-WAY selecting unit 240, as a result of the process. The control unit 250 changes a response to the request corresponding to the statuses of these signals.

Specifically, when the MIB_INDEX_MCH signal received from the MIB 230 is ON, the control unit 250 returns the request to the port 210 and has the request retried. This is because when the MIB 230 is performing the process of the data block of the same index as that of the request address, the data block stored in the cache memory 300 may be overwritten at an unexpected timing by the request sent from the port 210, resulting in deletion of the data block from the cache.

When the MIB_INDEX_MCH signal received from the MIB 230 is OFF, the control unit 250 selects a WAY in which the request data block to be processed is to be stored, allocates the selected WAY to the request, and performs the process corresponding to the request content.

Specifically, when the HIT signal received from the hit determining unit 220 is ON, the control unit 250 performs the process by allocating the WAY (hereinafter, "hit WAY"), in which the request address hits the tag memory 221, to the request.

When the MISS signal received from the hit determining unit 220 is ON, the control unit 250 performs a process by allocating to the request a WAY indicated by the RPL-WAY signal received from the replace-WAY selecting unit 240, that is the WAY (hereinafter, "replace WAY") which is determined to be most suitable for a rewriting based on a replacement algorithm.

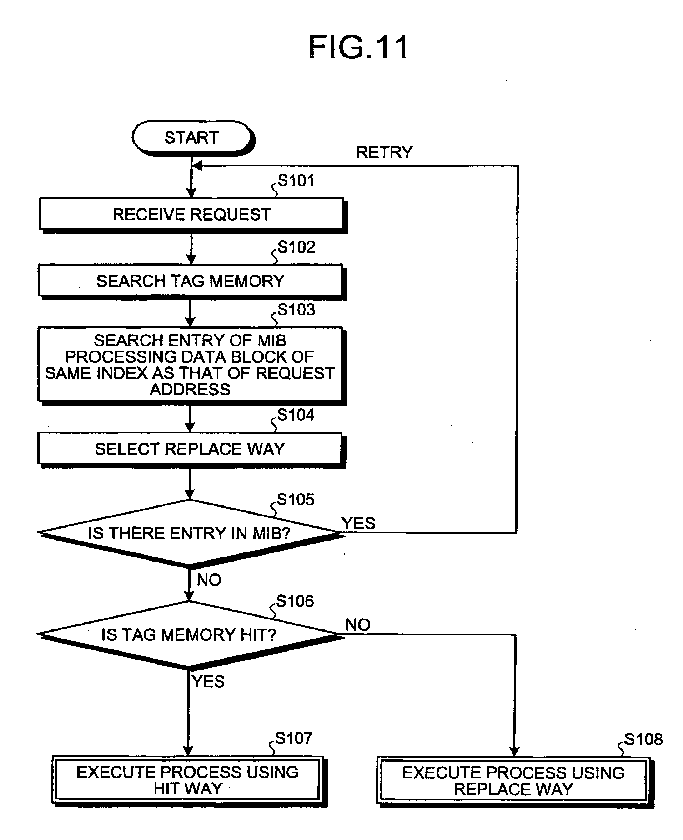

Next, the operation of the memory access control apparatus 200 is explained. Fig. 11 is a flowchart of the operation of the memory access control apparatus 200 shown in Fig. 7. Fig. 11 depicts a process procedure after the control unit 250 receives a request until it selects a WAY to be used.

The control unit 250 receives a request sent from the port 210 (step S101). In parallel with this, the hit determining unit 220, the MIB 230, and the replace-WAY selecting unit 240 receive a request address sent from the port 210.

Upon receiving the request address, the hit determining unit 220 searches the tag memory 21 to check whether a data block corresponding to the request address is present in the cache. The hit determining unit 220 outputs a search result to the control unit 250 (step S102). Upon receiving the request address, the MIB 230 checks whether a process is being performed to process a data block having the same index as that of the request address, and outputs a check result to the control unit 250 (step S103).

Upon receiving the request address, the replace-WAY selecting unit 240 selects, based on the replacement algorithm, a WAY most suitable for replacement from among WAYs belonging to the set corresponding to the request address and outputs a selection result to the control unit 250 (step S104).

Upon determining, by the received from the MIB 230, that the MIB 230 is performing a process to process a data block having the same index as that of the request address (YES at step S105), the control unit 250 returns the request to the port 210 to have the request retried.

On the other hand, upon determining that the MIB 230 is not performing a process to process a data block having the same index as that of the request address (NO at step S105), the control unit 250 performs the process corresponding to the request content.

In this case, when it is determined, by searching the tag memory 221, that a data block corresponding to the request address is cached (YES at step S106), the control unit 250 allocates the hit WAY received from the hit determining unit 220 to the request as a storage area of the cache (step S107). When it is determined that a data block corresponding to the request address is not cached (NO at step S106), the control unit 250 allocates the replace WAY received from the replace-WAY selecting unit 240 to the request as a storage area of the cache (step S108).

As explained above, in the conventional memory access control system, to avoid deletion of a data block from the cache memory 300 at an unexpected timing due to the overwriting by the MIB 230, when the MIB 230 is executing a process to process a data block to be processed having the same index as that of the request address, the system makes the request retried.

However, even when the MIB 230 is executing a process to process a data block to be processed having the same index as that of the request address, when a WAY different from the WAY assigned to this process is assigned to a new request, unexpected deletion of a cache entry does not occur. That is, according to the conventional memory access control system, the request is retried more than necessary, resulting in performance degradation.

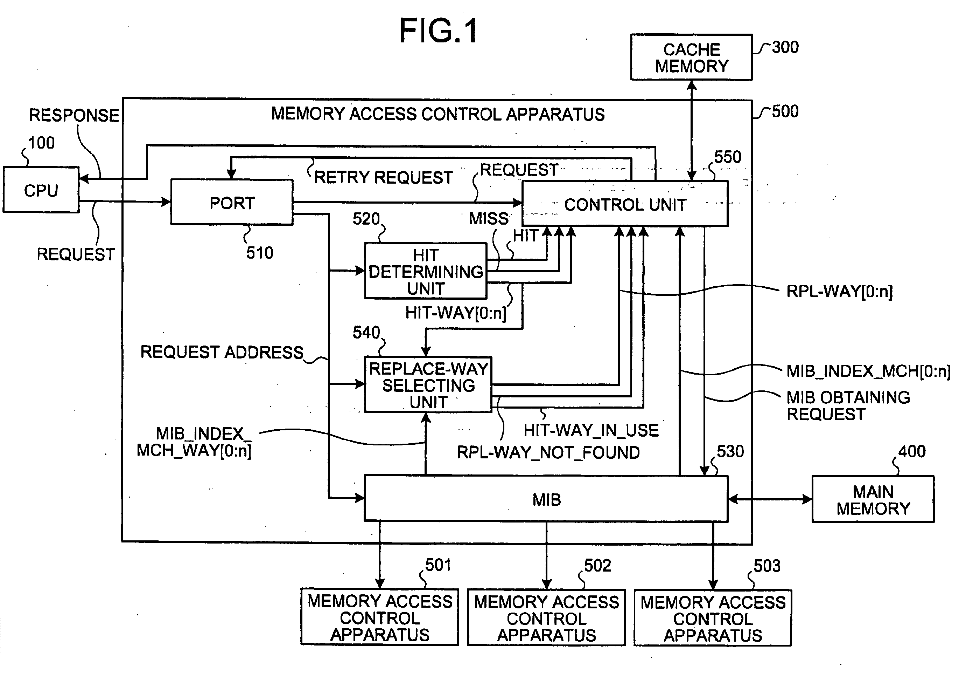

Explained next is a memory access control apparatus according to an embodiment of the present invention. Fig. 1 is a functional block diagram of a configuration of the memory access control apparatus according to an embodiment of the present invention. As shown in Fig. 1, a memory access control apparatus 500 is configured to be connected to the CPU 100, the cache memory 300, and the main memory 400. The CPU 100, the cache memory 300, and the main memory 400 are already explained, and are not explained here.

The memory access control apparatus 500 controls accesses to the cache memory 300 and the main memory 400 to enable the CPU 100 to efficiently execute load and store requests. The memory access control apparatus 500 employs a set associative scheme to control caches. The memory access control apparatus 500 can be also configured as one apparatus together with the CPU 100, the cache memory 300, or the main memory 400.

When the multiprocessor system includes caches for each processor, the memory access control apparatus 500 is also connected to other memory access control apparatuses such as a memory access control apparatus 501 to a memory access control apparatus 503.

As shown in Fig. 1, the memory access control apparatus 500 includes a port 510, a hit determining unit 520, an MIB 530, a replace-WAY selecting unit 540, and a control unit 550. Details of each processing unit are explained below by focusing attention to a process up to an allocation of a WAY to a new request.

The port 510 temporarily stores therein a request sent from the CPU 100. The request in the port 210 is read in a predetermined priority order, and is sent to the control unit 550. At the same time, a request address is sent to the hit determining unit 520, the MIB 530, and the replace-WAY selecting unit 540.

The hit determining unit 520 determines whether a data block corresponding to a request address sent from the port 510 is stored in the cache memory 300. A configuration of the hit determining unit 520 is similar to that of the hit determining unit 220 shown in Fig. 8. A HIT-WAY signal is sent to the replace-WAY selecting unit 540 as well as the control unit 550.

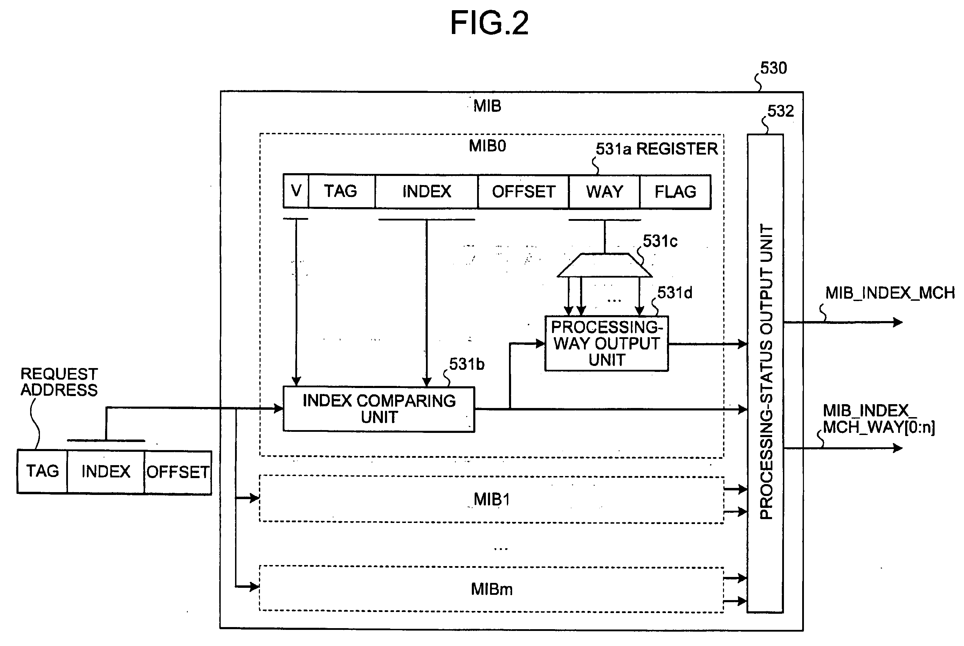

The MIB 530 manages the execution of a time-consuming process such as transfer of a data block between the main memory 400 and the MIB 530. Fig. 2 depicts a configuration of the MIB 530. As shown in Fig. 2, the MIB 530 includes the entries of MIB0 to MIBm, and a processing-status output unit 532. When a request address is sent from the port 510, the MIB 530 inputs an index of the request address to each entry.

Each entry includes a register 531a, an index comparing unit 531b, a decoder 531c, and a processing-WAY output unit 531d. The register 531a and the index comparing unit 531b are apparatuses similar to the register 231a and the index comparing unit 231b shown in Fig. 9.

The decoder 531c is a circuit that sets to ON a signal corresponding to a WAY set in the register 531a, and outputs the signal to the processing-WAY output unit 531d. The processing-WAY output unit 531d transfers a signal output from the decoder 531c to the processing-status output unit 532, when the signal output from the index comparing unit 531b is ON.

The processing-status output unit 532 takes a logical sum of signals output from the index comparing unit 531b of each entry, and outputs the logical sum as the MIB_INDEX_MCH signal. The processing-status output unit 532 also takes a logical sum of signals transferred from the processing-WAY output unit 531d of each entry, and outputs the logical sum as an MIB_{_}INDEX_MCH_WAY signal.

That is, the MIB_INDEX_MCH signal turns ON when the MIB 530 is executing the data block to be processed having the same index as that of the request address. The MIB_INDEX_MCH_WAY signal corresponding to a WAY assigned to the process turns ON, when the MIB 530 is executing the data block to be processed having the same index as that of the request address. The MIB_INDEX_MCH signal is output to the control unit 550, and the MIB_INDEX_MCH_WAY signal is output to the replace-WAY selecting unit 540.

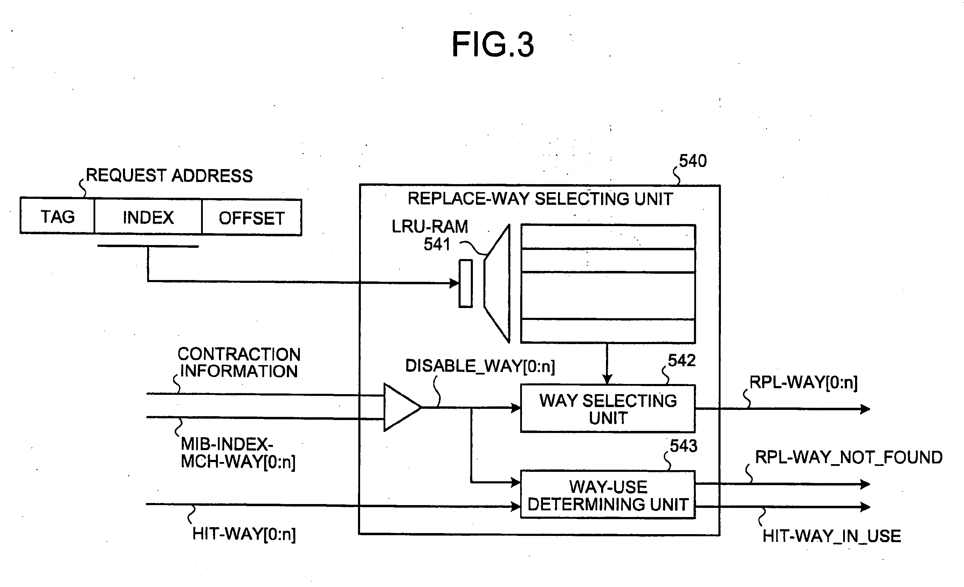

The replace-WAY selecting unit 540 selects a WAY in which the data block corresponding to the request address sent from the port 510 is to be stored. Fig. 3 depicts a configuration of the replace-WAY selecting unit 540. As shown in Fig. 3, the replace-WAY selecting unit 540 includes an LRU-RAM 541, a WAY selecting unit 542, and a WAY-use determining unit 543. When a request address is sent from the port 510, the replace-WAY selecting unit 540 inputs the index of the request address to the LRU-RAM 541.

The LRU-RAM 541 is similar to the LRU-RAM 241 shown in Fig. 10. When the index of the request address is input, the LRU-RAM 541 selects a set corresponding to this index, and outputs the time at which each WAY contained in the selected set is accessed last, to the WAY selecting unit 542.

When the time at which each WAY is accessed last is input, the WAY selecting unit 542 selects a WAY accessed at the oldest time, and sets the RPL-WAY signal corresponding to this WAY to ON. In this case, the WAY selecting unit 542 refers to a DISABLE_WAY signal that is a logical sum for each WAY of the input degeneracy information and the MIB_INDEX_MCH_WAY signal, and excludes a WAY unable to be used due to a permanent fault or the like, and a WAY assigned to the process executed by the MIB 530, from WAYs to be selected. The RPL-WAY signal is output to the control unit 550.

As described above, a replacement algorithm that selects a WAY in which the longest time has passed since the last access, as a replace WAY, is called the LRU algorithm, which can achieve a very high cache hit rate. According to the configuration of the replace-WAY selecting unit 540, a replace WAY is selected based on the LRU algorithm, by excluding the WAY assigned to the process being executed by the MIB 530. Therefore, unexpected deletion of a cache entry can be avoided while a high cache hit rate is maintained.

Further, with the replace-WAY selecting unit 540, the mechanism that excludes a WAY degenerated due to a permanent fault or the like in the conventional technologies is expanded. Accordingly, a function of excluding the WAY assigned to the process executed by the MIB 530 can be easily achieved.

Instead of the LRU-RAM 541 storing the time at which the cache memory 300 is accessed last, it can be so configured that the tag memory of the hit determining unit 520 stores the time. As the replacement algorithm, other algorithm than the LRU algorithm can be also employed.

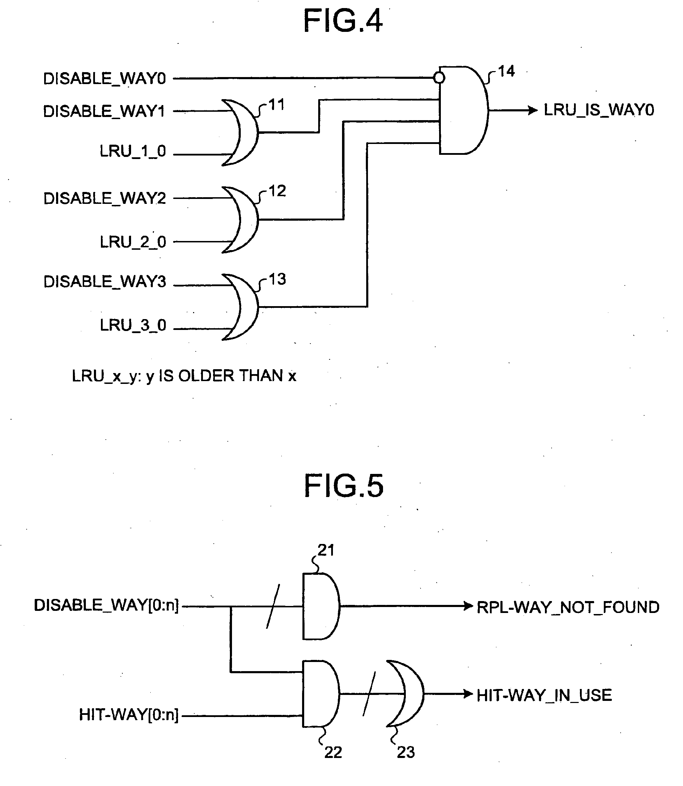

Fig. 5 is one example of a configuration of the WAY selecting unit 542. Fig. 4 is a circuit schematic diagram of a portion which determines whether the WAY0 becomes a replace WAY in the WAY selecting unit 542.

An output of an OR circuit 11 turns ON when a WAY 1 is outside of the selection or when the last access time of the WAY1 is later than the last access time of WAY0, that is, when the WAY1 is not suitable for the replace WAY. Similarly, an output of an OR circuit 12 turns ON when a WAY2 is not suitable for the replace WAY, and an output of an OR circuit 3 turns ON when a WAY3 is not suitable for the replace WAY.

An output of an AND circuit 14 turns ON when outputs of OR circuits 11 to 13 are all ON and also when the WAY0 is not the outside of the selection. The WAY selecting unit 542 includes similar circuits by the number of WAYs.

The WAY-use determining unit 543 determines whether a WAY is usable. The WAY-use determining unit 543 refers to the DISABLE_WAY signal. When all WAYs are outside of the selection, the WAY-use determining unit 543 sets to ON an RPL-WAY_NOT_FOUND signal indicating that a selectable replace WAY is not present.

The WAY-use determining unit 543 compares the HIT-WAY signal received from the hit determining unit 520 with the DISABLE_WAY signal. When a WAY corresponding to the HIT-WAY signal is outside of the selection, the WAY-use determining unit 543 sets a HIT_WAY_IN_USE signal to ON.

When the hit determining unit 520 determines that the request address hits any one WAY, if a data block is only read from or written to the cache memory 300, it is only required to operate a region already assigned. Therefore, the request can be executed without considering a process being progressed by the MIB 530.

However, when it is necessary to obtain an entry of the MIB 530 to execute the request, if a WAY assigned to a process newly registered in the entry of the MIB 530 matches a WAY assigned to a process already registered in the entry, there is a possibility that a process completed first and cached is overwritten at an unexpected timing by the process completed later, and the cache entry is deleted.

The HIT_WAY_IN_USE signal is used by the control unit 550 to avoid the deletion of a cache entry. The entry of the MIB 530 needs to be obtained when the hit determining unit 520 determines that the request address hits any one WAY, when it is necessary to invalidate the data block of other cache in a multiprocessor system having caches for each processor, for example.

Fig. 5 is one example of a configuration of the WAY-use determining unit 543. An output of an AND circuit 21 is an RPL-WAY_NOT_FOUND signal, and turns ON when all WAYs are outside of the selection. When the hit determining unit 520 determines that the request address hits any one WAY and also when this WAY is outside of the selection, an AND circuit 22 sets the output corresponding to this WAY to ON. An output of an OR circuit 23 is a HIT_WAY_IN_USE signal, and turns ON when any signal output by the AND circuit 22 is ON.

The control unit 550 executes various kinds of control corresponding to a request sent from the port 510. The control unit 550 receives the request from the port 510, and receives input of various kinds of signals output from the hit determining unit 520, the MIB 530, and the replace-WAY selecting unit 540, as a result of the process. The control unit 550 changes a response to the request corresponding to the statuses of these signals.

Specifically, when the MISS signal received from the hit determining unit 520 is ON, that is, when the request address does not hit the cache, the control unit 550 returns the request to the port 510 and has the request retried. This is because when the RPL-WAY_NOT_FOUND signal received from the replace-WAY selecting unit 540 is ON, all WAYs are outside the selection. When the RPL-WAY_NOT_FOUND signal is OFF, the control unit 550 performs the process by allocating the replay WAY indicated by the RPL-WAY received from the replace-WAY selecting unit 540 to the request.

When the HIT signal received from the hit determining unit 520 is ON, that is, when the request address hits the cache, the entry of the MIB 530 needs to be obtained. Further, when the HIT-WAY_IN_USE signal received from the replace-WAY selecting unit 540 is ON, the control unit 550 returns the request to the port 510 to have the request retried, thus avoiding deletion of a cache entry. When it is not necessary to obtain the entry of the MIB 530 or when the HIT-WAY_IN_USE signal is OFF, the control unit 550 performs the process again using the hit WAY indicated by the HIT-WAY signal received from the hit determining unit 520.

When the HIT-WAY_IN_USE signal is ON, a cache entry is likely to be deleted in a short time, which may decreases the cache hit rate. Accordingly, the request can be retried, regardless of whether the entry of the MIB 530 needs to be obtained.

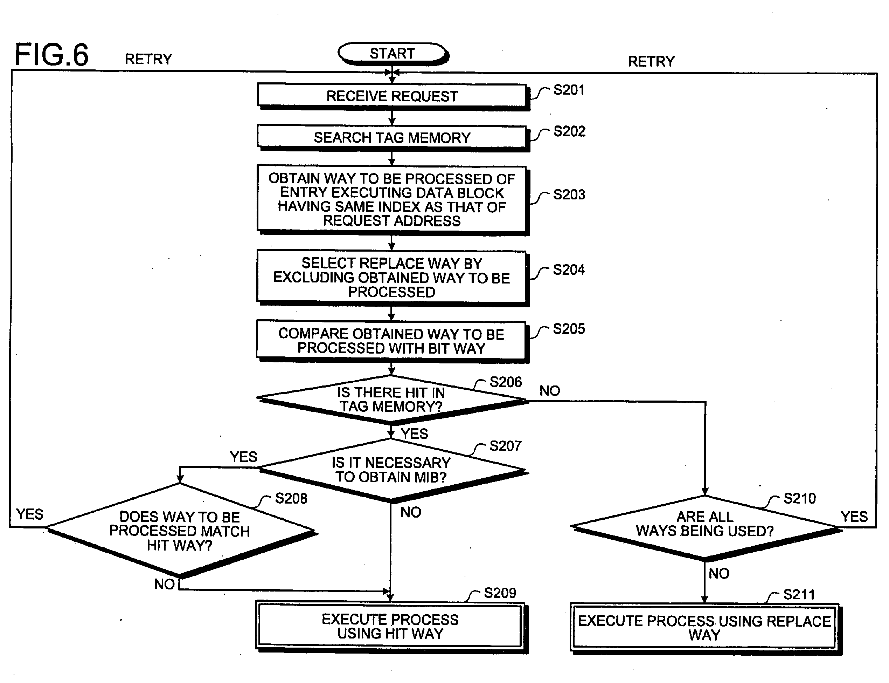

A process procedure of the memory access control apparatus 500 shown in Fig. 1 is explained next. Fig. 6 is a flowchart of the operation of the memory access control apparatus 500 shown in Fig. 1. Fig. 6 depicts a process procedure after the control unit 550 receives a request until it selects a WAY to be used.

The control unit 550 receives a request sent from the port 510 (step S201). In parallel with this, the hit determining unit 520, the MIB 530, and the replace-WAY selecting unit 540 receive a request address sent from the port 510.

Upon receiving the request address, the hit determining unit 520 searches the tag memory to check whether a data block corresponding to the request address is present in the cache. The hit determining unit 520 outputs a search result to the control unit 550 and the replace-WAY selecting unit 540 (step S202). Upon receiving the request address, the MIB 530 obtains WAYs to be processed of the entry executing a data block having the same index as that of the request address, and outputs an obtained result to the replace-WAY selecting unit 540 (step S203).

Upon receiving the request address, the replace-WAY selecting unit 540 selects, based on the replacement algorithm, a WAY most suitable for replacement from among WAYs belonging to the set corresponding to the request address by excluding the WAYs to be processed notified by the MIB 530, and outputs a selection result to the control unit 550 (step S204). The replace-WAY selecting unit 540 also checks whether the hit WAY notified by the hit determining unit 520 is included in the WAYs to be processed, and outputs a check result to the control unit 550 (step S205).

When the request address generates a hit in the tag memory of the hit determining unit 520 (YES at step S206), the control unit 550 needs to obtain the entry of the MIB 530 (YES at step S207). When the hit WAY is included in the WAYs to be processed (YES at step S208), the control unit 550 returns the request to the port 510 to have the request retried. When it is not necessary to obtain the entry of the MIB 530 (NO at step S207), or when the hit WAY is not included in the WAYs to be processed (NO at step S208), the control unit 550 performs the process using the hit WAY received from the hit determining unit 520 as a storage area of the cache (step S209).

When the request address does not hit the tag memory of the hit determining unit 520 (NO at step S206), the control unit 550 returns the request to the port 510, and have the request retried, when all WAYs are the WAYs to be processed by the MIB 530 (YES at step S210). In other case (NO at step S210), the control unit 550 executes the process by using the replace WAY received from the replace-WAY selecting unit 540 as a storage area of the cache (step S211).

As described above, in the memory access control system of the present embodiment, the replace WAY is selected by excluding the WAYs to be used in the process being progressed by the MIB 530, and the request is retried only when all WAYs are to be used. Therefore, performance degradation due to the retry can be minimized. Because the replay WAY is always selected based on the replacement algorithm, a cache hit rate can be kept high.

### INDUSTRIAL APPLICABILITY

As set forth hereinabove, the memory access control apparatus and the memory access control method according to an embodiment of the present invention are useful to prevent deletion of a cache entry at an unexpected timing due to the operation of the MIB, and are particularly effective to minimize retry attempts and maintain a high cache hit rate.

## Claims

1. A memory access control apparatus (500) that performs a set associative cache control with a buffer (530) for storing information on a plurality of requests and processing the requests in parallel, the memory access control apparatus (500) **characterised by**:
a processing-status output unit (532) that searches, upon receipt of a memory access request, the buffer (530) for a prior request for a data block corresponding to a set of a data block to be processed in response to the memory access request, and outputs a WAY assigned to the prior request;
a replace-WAY selecting unit (540) that selects a WAY to be assigned to the memory access request based on a predetermined replacement algorithm while excluding the WAY output from the processing-status output unit (532); and
a control unit (550) that stores, when the data block to be processed in response to the memory access request does not result in a cache hit, the data block in the WAY selected by the replace-WAY selecting unit (540).

2. The memory access control apparatus (500) according to claim 1, wherein the predetermined replacement algorithm is a least recently used algorithm.

3. The memory access control apparatus (500) according to claim 1, wherein the control unit (550) controls the memory access request to be retried when the data block to be processed in response to the memory access request does not result in a cache hit and output of the processing-status output unit (532) includes all available WAYs.

4. The memory access control apparatus (500) according to claim 1, wherein the control unit (550) controls the memory access request to be retried when the data block to be processed in response to the memory access request results in a cache hit and output of the processing-status output unit (532) includes a hit WAY.

5. A memory access control method for a memory access control apparatus that performs a set associative cache control with a buffer for storing information on a plurality of requests and processing the requests in parallel, the memory access control method **characterised in that**:
searching, upon receipt of a memory access request, the buffer for a prior request for a data block corresponding to a set of a data block to be processed in response to the memory access request;
outputting a WAY assigned to the prior request; selecting a WAY to be assigned to the memory access request based on a predetermined replacement algorithm while excluding the WAY output at the outputting; and
storing, when the data block to be processed in response to the memory access request does not result in a cache hit, the data block in the WAY selected at the selecting.

6. The memory access control method according to claim 5, wherein the predetermined replacement algorithm is a least recently used algorithm.

7. The memory access control method according to claim 5, further comprising controlling the memory access request to be retried when the data block to be processed in response to the memory access request does not result in a cache hit and the WAY output at the outputting includes all available WAYs.

8. The memory access control method according to claim 5, further comprising controlling the memory access request to be retried when the data block to be processed in response to the memory access request results in a cache hit and the WAY output at the outputting includes a hit WAY.

## Patentansprüche

1. Speicherzugriffssteuervorrichtung (500), die eine satzassoziative Cache-Steuerung mit einem Puffer (530) zum Speichern von Informationen über eine Vielzahl von Aufforderungen und parallelen Verarbeiten der Aufforderungen ausführt, welche Speicherzugriffssteuervorrichtung (500) **gekennzeichnet ist durch**:
eine Verarbeitungsstatus-Ausgabeeinheit (532), die nach Empfang einer Speicherzugriffsaufforderung den Puffer (530) nach einer früheren Aufforderung für einen Datenblock durchsucht, der einem Satz eines Datenblocks entspricht, der als Antwort auf die Speicherzugriffsaufforderung zu verarbeiten ist, und einen WEG ausgibt, der der früheren Aufforderung zugeordnet ist;
eine Ersatz-WEG-Selektionseinheit (540), die einen WEG, der der Speicherzugriffsaufforderung zuzuordnen ist, auf der Basis eines vorbestimmten Ersetzungsalgorithmus selektiert, während der WEG ausgeschlossen ist, der von der Verarbeitungsstatus-Ausgabeeinheit (532) ausgegeben wird; und
eine Steuereinheit (550), die dann, wenn der Datenblock, der als Antwort auf die Speicherzugriffsaufforderung zu verarbeiten ist, keinen Cache-Treffer ergibt, den Datenblock in dem WEG speichert, der **durch** die Ersatz-WEG-Selektionseinheit (540) selektiert wurde.

2. Speicherzugriffssteuervorrichtung (500) nach Anspruch 1, bei der der vorbestimmte Ersetzungsalgorithmus ein Least-Recently-Used-Algorithmus ist.

3. Speicherzugriffssteuervorrichtung (500) nach Anspruch 1, bei der die Steuereinheit (550) die Speicherzugriffsdufforderung steuert, um wiederholt zu werden, wenn der Datenblock, der als Antwort auf die Speicherzugriffsaufforderung zu verarbeiten ist, keinen Cache-Treffer ergibt und die Ausgabe der Verarbeitungsstatus-Ausgabeeinheit (532) alle verfügbaren WEGe enthält.

4. Speicherzugriffssteuervorrichtung (500) nach Anspruch 1, bei der die Steuereinheit (550) die Speicherzugriffsaufforderung steuert, um wiederholt zu werden, wenn der Datenblock, der als Antwort auf die Speicherzugriffsaufforderung zu verarbeiten ist, einen Cache-Treffer ergibt und die Ausgabe der Verarbeitungsstatus-Ausgabeeinheit (532) einen Treffer-WEG enthält.

5. Speicherzugriffssteuerverfahren für eine Speicherzugriffssteuervorrichtung, die eine satzassoziative Cache-Steuerung mit einem Puffer zum Speichern von Informationen über eine Vielzahl von Aufforderungen und parallelen Verarbeiten der Aufforderungen ausführt, welches Speicherzugriffssteuerverfahren **gekennzeichnet ist durch**:
Durchsuchen, nach Empfang einer Speicherzugriffsaufforderung, des Puffers nach einer früheren Aufforderung für einen Datenblock, der einem Satz eines Datenblocks entspricht, der als Antwort auf die Speicherzugriffsaufforderung zu verarbeiten ist;
Ausgeben eines WEGs, der der früheren Aufforderung zugeordnet ist;
Selektieren eines WEGs, der der Speicherzugriffsaufforderung zuzuordnen ist, auf der Basis eines vorbestimmten
Ersetzungsalgorithmus, während der WEG ausgeschlossen ist, der beim Ausgeben ausgegeben wurde; und
Speichern, wenn der Datenblock, der als Antwort auf die Spcicherzugriffsaufforderung zu verarbeiten ist, keinen Cache-Treffer ergibt, des Datenblocks in dem WEG, der beim Selektieren selektiert wurde.

6. Speicherzugriffssteuerverfahren nach Anspruch 5, bei dem der vorbestimmte Ersetzungsalgorithmus ein Least-Recently-Used-Algorithmus ist.

7. Speicherzugriffssteuerverfahren nach Anspruch 5, ferner mit dem Steuern der Speicherzugrittsaufforderung, um wiederholt zu werden, wenn der Datenblock, der als Antwort auf die Speicherzugriffsaufforderung zu verarbeiten ist, keinen Cache-Treffer ergibt und die WEG-Ausgabe beim Ausgeben alle verfügbaren WEGe enthält.

8. Speicherzugriffssteuerverfahren nach Anspruch 5, ferner mit dem Steuern der Speicherzugriffsaufforderung, um wiederholt zu werden, wenn der Datenblock, der als Antwort auf die Speicherzugriffsaufforderung zu verarbeiten ist, einen Cache-Treffer ergibt und die WEG-Ausgabe beim Ausgeben einen Treffer-WEG enthält.

## Revendications

1. Appareil de commande d'accès mémoire (500) qui effectue une commande cache associative avec un tampon (530) pour mémoriser une information concernant une pluralité de requêtes et traiter les requêtes en parallèle, l'appareil de commande d'accès mémoire (500) étant **caractérisé par** :
une unité de sortie d'état de traitement (532) qui recherche, lors de la réception d'une requête d'accès mémoire, le tampon (530) pour une requête précédente pour un bloc de données correspondant à un ensemble d'un bloc de données à traiter en réponse à la requête d'accès mémoire, et délivre un TRAJET assigné à la requête précédente ;
une unité de sélection de TRAJET de remplacement (540) qui sélectionne un TRAJET à assigner à la requête d'accès mémoire en fonction d'un algorithme de remplacement prédéterminé tout en excluant le trajet délivré depuis l'unité de sortie d'état de traitement (532) ; et
une unité de commande (550) qui mémorise, lorsque le bloc de données à traiter en réponse à la requête d'accès mémoire n'a pas pour résultat de présence dans le cache, le bloc de données dans le TRAJET sélectionné par l'unité de sélection de TRAJET de remplacement (540).

2. Appareil de commande d'accès mémoire (500) selon la revendication 1, dans lequel l'algorithme de remplacement prédéterminé est un algorithme utilisé le moins fréquemment.

3. Appareil de commande d'accès mémoire (500) selon la revendication 1, dans lequel l'unité de commande (550) commande la requête d'accès mémoire à réessayer lorsque le bloc de données à traiter en réponse à la requête d'accès mémoire n'a pas pour résultat de présence dans le cache et la sortie de l'unité de sortie d'état de traitement (532) comprend tous les TRAJETS disponibles.

4. Appareil de commande d'accès mémoire (500) selon la revendication 1, dans lequel l'unité de commande (550) commande la requête d'accès mémoire à réessayer lorsque le bloc de données à traiter en réponse à la requête d'accès mémoire a pour résultat une présence dans le cache et la sortie de l'unité de sortie d'état de traitement (532) comprend un TRAJET caché.

5. Procédé de commande d'accès mémoire pour un appareil de commande d'accès mémoire qui effectue une commande cache associative déterminée avec un tampon pour mémoriser une information concernant une pluralité de requêtes et traiter les requêtes en parallèle, le procédé de contrôle d'accès mémoire étant **caractérisé par** :
la recherche, lors de la réception d'une requête d'accès mémoire, du tampon pour une requête précédente pour un bloc de données correspondant à un ensemble d'un bloc de données à traiter en réponse à la requête d'accès mémoire ;
la délivrance d'un TRAJET assigné à la requête précédente ;
la sélection d'un TRAJET à assigner à la requête d'accès mémoire en fonction d'un algorithme de remplacement prédéterminé tout en excluant le TRAJET délivré à la sortie; et
la mémorisation, lorsque le bloc de données à traiter en réponse à la requête d'accès mémoire n'a pas pour résultat de présence dans le cache, du bloc de données dans le TRAJET sélectionné lors de la sélection.

6. Procédé de commande d'accès mémoire selon la revendication 5, dans lequel l'algorithme de remplacement prédéterminé est l'algorithme utilisé le moins fréquemment.

7. Procédé de commande d'accès mémoire selon la revendication 5, comportant en outre la commande de la requête d'accès mémoire à réessayer lorsque le bloc de données à traiter en réponse à la requête d'accès mémoire n'a pas pour résultat de présence dans le cache et le TRAJET délivré à la sortie comprend tous les TRAJETS disponibles.

8. Procédé de commande d'accès mémoire selon la revendication 5, comportant en outre la commande de la requête d'accès mémoire à réessayer lorsque le bloc de données à traiter en réponse à la requête d'accès mémoire a pour résultat une présence dans le cache et le TRAJET délivré à la sortie comprend un TRAJET caché.
